# EUROPÄISCHE PATENTSCHRIFT

(11) **EP 3 775 977 B1**
(45) Veröffentlichungstag und Bekanntmachung des Hinweises auf die Patenterteilung: **30.07.2025**
(21) Anmeldenummer: 19715868.6
(22) Anmeldetag: 29.03.2019
(51) Int. Cl.: G01S 13/931, G01S 13/52, G01S 7/41

(54) **VERFAHREN ZUM ERKENNEN EINES HINDERNISSES VOR EINEM FAHRZEUG**
METHOD FOR IDENTIFYING AN OBSTACLE IN FRONT OF A VEHICLE
PROCÉDÉ DE DÉTECTION D'UN OBSTACLE DEVANT UN VÉHICULE

(30) Priorität: 12.04.2018 DE 102018205532
(43) Veröffentlichungstag der Anmeldung: 17.02.2021
(73) Patentinhaber: Robert Bosch GmbH, 70442 Stuttgart (DE)
(72) Erfinder: LEHNERTZ, Benedikt, 71732 Tamm (DE); FISCHER, Lea, 70825 Korntal-Muenchingen (DE); PETEREIT, Robin, 24113 Kiel (DE); SCHLEWEIS, Nico, 74199 Donnbronn (DE)
(86) Internationale Anmeldenummer: PCT/EP2019/058039
(87) Internationale Veröffentlichungsnummer: WO 2019/197179

(56) Entgegenhaltungen:
- EP-A2- 2 808 698
- DE-A1- 102006 020 387
- DE-A1- 102008 001 838
- DE-A1- 19 932 094
- US-A1- 2006 267 830
- US-A1- 2011 025 548
- US-A1- 2016 161 609
- US-A1- 2017 309 997

## Beschreibung

### Stand der Technik

Verfahren zum Erkennen eines Hindernisses vor einem Fahrzeug mittels eines Radarsensors sind aus automobilen Anwendungen bekannt. Zur Hindernisklassifikation werden hier Merkmalsräume in Kombination mit Klassifikationsmethoden verwendet. Merkmale können beispielsweise Leistungswerte, Varianzverläufe usw. sein. Diese Methoden basieren außerdem auf einer longitudinalen Annäherung des Fahrzeugs zum Objekt. Die aus dem Stand der Technik bekannten Klassifikationsalgorithmen sind in starkem Maß von der Einbauposition eines verwendeten Radarsensors abhängig, da eine nicht deterministische Abhängigkeit des Merkmalsraums von den Einbauparametern wie beispielsweise einer Einbauposition oder auch einer Verdeckung durch ein Fahrzeugemblem besteht. Daher ist für jedes Fahrzeugmodell eine zeitaufwendige Modifikation und Validierung des Klassifikationsalgorithmus nötig.

Die aus dem Stand der Technik bekannten Verfahren haben daher den Nachteil, dass eine Verwendung eines Radarsensors zur Erkennung eines Hindernisses vor einem Fahrzeug nicht ohne aufwendige Applikation möglich ist. Die aus dem Stand der Technik bekannten Verfahren haben ebenfalls den Nachteil, dass eine longitudinale Annäherung des Fahrzeugs zum detektierten Objekt angenommen wird, so dass eine Objekterkennung von Objekten seitlich der Bewegungsrichtung des Fahrzeugs nicht oder nur erschwert möglich ist. Aus diesen Gründen sind die aus dem Stand der Technik bekannten Verfahren nicht geeignet, um mittels eines Radarsensors Hindernisse vor einem Off-High-Way-Fahrzeug zu erkennen.

Die Druckschrift DE 10 2006 020387 A1 offenbart ein Verfahren zur Detektion und Identifikation von Objekten mit geringer Höhenausdehnung auf einer in Fahrtrichtung vor einem Fahrzeug befindlichen Fahrbahn, bei welchem durch Aussenden elektromagnetischer Strahlung in Fahrtrichtung vor das Fahrzeug ein Bereich der sich dort befindlichen Fahrbahn ausgeleuchtet wird, bei welchem mittels eines Empfängers Teile der aus diesem Bereich reflektierten elektromagnetischen Strahlung empfangen und einer Auswertung hinsichtlich dort detektierbarer Objekte unterzogen werden, und bei welchem bei Detektion eines Objekts, dessen Entfernung zum Fahrzeug bestimmt und darauf basierend ein Gefährdungspotential bezüglich des Fahrbetriebs abgeleitet wird, um dementsprechend auf ein Fahrerassistenzsystem einzuwirken. Ein Objekt, das als Objekt mit geringer Höhenausdehnung identifiziert wird, wird kein beachtliches Gefährdungspotential beigemessen, so dass kein Einwirken auf ein Fahrerassistenzsystem erfolgt.

Die Druckschrift DE 10 2008 001838 A1 offenbart ein Verfahren zur Vermessung eines in einer Fahrtrichtung eines Fahrzeugs befindlichen Hindernisses, mit den Schritten: Aufnehmen mindestens eines Abstandswerts des Hindernisses bei einer Annäherung des Fahrzeugs an das Hindernis mittels mindestens eines an dem Fahrzeug angeordneten abstandsempfindlichen Sensors, Bestimmung eines Grenz-Abstandswerts, bei dessen Unterschreitung eine Detektierbarkeit des Hindernisses unter einem Schwellwert liegt und Ermitteln einer Höhe des Hindernisses unter Verwendung des Grenz-Abstandswerts.

Aus der Druckschrift US 2011/025548 A1 ist ein Verfahren zum Verfolgen von Zielen bekannt, die von Sensoren in einem Wirtskraftfahrzeug erfasst werden.

Die Druckschrift EP 2 808 698 A2 offenbart eine Antenne einer Landfahrzeugradarvorrichtung, die eine Mehrzahl von Strahlerfeldern aufweist, wobei die Größe eines der Strahlerfelder durch eine eine Keule bestimmt ist, die einem zweiten Sichtfeld entspricht, das von einem ersten Sichtfeld verschieden ist.

Die Druckschrift US 2017/309997 A1 offenbart ein Radarerfassungssystem für ein Fahrzeug mit einem Sender und einem Empfänger, der konfiguriert ist, um das übertragene Funksignal zu empfangen, das von Objekten in der Umgebung reflektiert wird; wobei die Antenne des Senders eine Vielzahl von linearen Anordnungen von Strahlern und einen Leistungskombinator umfasst, und wobei der Leistungskombinator die Vielzahl von linearen Anordnungen von Strahlern zu einem einzigen Antennenanschluss kombiniert, und wobei eine Anordnung der linearen Anordnungen von Strahlern so ausgewählt wird, dass ein geformtes Antennenmuster mit einer Hauptkeulenform und Schulterformen gebildet wird, um ausgewählte Erfassungszonen ohne Nullen oder Löcher in der Abdeckung abzudecken.

Die Druckschrift US 2006/267830 A1 offenbart ein Verfahren zur Erfassung eines Ziels mit einem Radarsystem, wobei mehrere Signale ausgesendet werden, so dass durch Verarbeitung des ersten und des zweiten Signals zwischen einem gültigen Ziel und einem falschen Ziel unterschieden werden kann.

Die Druckschrift DE 199 32 094 A1 offenbart eine Vorrichtung zur Fahrbahnzustandserkennung in einem Kraftfahrzeug, welche einen Fahrbahnabschnitt innerhalb eines Entfernungsbereichs zwischen 2 m und 200 m in Fahrtrichtung vor dem Fahrzeug ausleuchtet und welche Echosignale aus dem ausgeleuchteten Fahrbahnausschnitt aufnimmt, um daraus eine Einordnung des Fahrbahnzustands im Fahrbahnabschnitt in vorgegebene Zustandskategorien abzuleiten.

Die Druckschrift US 2016/161609 A1 offenbart ein Objekterfassungsgerät mit einer Sendeantenne und einer Empfangsantenne, wobei mindestens eine Grundgeschwindigkeit eines beweglichen Körpers, der mindestens einem Azimut entspricht, ermittelt wird, und eine relative Geschwindigkeit des Objekts erfasst wird.

### Offenbarung der Erfindung

Das erfindungsgemäße Verfahren zum Erkennen eines Hindernisses vor einem Fahrzeug mittels eines Radarsensors, wobei der Radarsensor einen Überwachungsbereich vor dem Fahrzeug überwacht, wobei eine Klassifikation eines Mittels des Radarsensors im Überwachungsbereich detektierten Objekts vorgenommen wird, hat demgegenüber den Vorteil, dass der Überwachungsbereich in Überwachungsteilbereiche unterteilt wird und für einen ersten Überwachungsteilbereich eine erste Klassifikationsregel zur Klassifikation verwendet wird und für einen zweiten Überwachungsteilbereich eine zweite Klassifikationsregel zur Klassifikation verwendet wird.

Der erste Überwachungsteilbereich erstreckt sich zwischen dem Radarsensor und einer Bodenschnittlinie und der zweite Überwachungsteilbereich zwischen der Bodenschnittlinie und einer maximalen Überwachungsentfernung. Unter Bodenschnittlinie ist dabei insbesondere eine Linie zu verstehen, die durch ein Schneiden einer Radarkeule des Radarsensors mit dem Boden definiert ist. In einer Draufsicht auf das Fahrzeug mit dem Radarsensor ist die Bodenschnittlinie also näherungsweise ein Kreissegment. Zwischen dem Fahrzeug und dem Kreissegment der Bodenschnittlinie treffen die vom Radarsensor emitierten Strahlen nicht auf den Boden. In dem Bereich zwischen der Bodenschnittlinie und der maximalen Überwachungsentfernung treffen die vom Radarsensor emitierten Strahlen auf den Boden.

Die Bodenschnittlinie wird mittels des Radarsensors bestimmt. Somit kann ein selbstkalibrierendes Verfahren verwirklicht werden. In besonders vorteilhafter Ausgestaltung wird mittels des Radarsensors der Bereich vor dem Fahrzeug abgetastet und die Bodenschnittlinie bestimmt, indem die vom Boden ausgehenden Radarreflexionen lokalisiert werden. Der Bereich, in dem Bodenreflexionen lokalisiert werden können, bildet dann den Bereich zwischen Bodenschnittlinie und maximaler Überwachungsentfernung, so dass die Begrenzung dieses Bereiches zum Radarsensor hin die Bodenschnittlinie darstellt.

Die erste Klassifikationsregel ist unabhängig von einer Eigengeschwindigkeit des im Überwachungsbereich detektierten Objektes. In besonders vorteilhafter Ausgestaltung handelt es sich bei der ersten Klassifikationsregel somit um eine Regel, die besagt, dass sowohl bewegte als auch stehende Objekte als Hindernisse klassifiziert werden.

Die zweite Klassifikationsregel umfasst, das im Überwachungsbereich detektierte Objekt in Abhängigkeit einer Eigengeschwindigkeit des im Überwachungsbereich detektierten Objekts zu klassifizieren. In besonders vorteilhafter Ausgestaltung umfasst die zweite Klassifikationsregel, dass nur bewegte Objekte als Hindernisse klassifiziert werden. Somit ist eine robuste Unterscheidung zwischen einem Hindernis und einer Bodenreflexion möglich.

Die zweite Klassifikationsregel umfasst, das im Überwachungsbereich detektierte Objekt als Hindernis zu klassifizieren, wenn mittels des Radarsensors erkannt wird, dass das im Überwachungsbereich detektierte Objekt über eine von null verschiedene Eigengeschwindigkeit verfügt oder zu einem früheren Zeitpunkt verfügt hat. Ein früherer Zeitpunkt ist dabei insbesondere ein vorangegangener Messzyklus. Es werden also Objekte als Hindernisse klassifiziert, die sich bewegen oder die sich zu einem früheren Zeitpunkt, also in einem vorangegangenen Messzyklus, bewegt haben. In besonders vorteilhafter Ausgestaltung werden Objekte, die sich in einem früheren Messzyklus bewegt haben, nur dann als Hindernis klassifiziert, wenn die Objekte in jedem Messzyklus zwischen einem aktuellen Messzyklus und dem vergangenen Messzyklus, bei dem das betreffende Objekt erstmalig als Hindernis klassifiziert wurde, registriert werden. Mit anderen Worten werden Objekte in dieser vorteilaften Ausgestaltung nur dann als Hindernisse klassifiziert, wenn sie seit einer ersten Erkennung als bewegtes Objekt ohne Unterbrechung in jedem Messzyklus identifieziert werden können.

Vorteilhaft ist, wenn es sich bei dem Fahrzeug um ein Off-High-Way-Fahrzeug handelt. Bei der Anwendung des erfindungsgemäßen Verfahrens im Zusammenhang mit einem Off-High-Way-Fahrzeug kann in besonders vorteilhafter Weise ausgenutzt werden, dass mit dem erfindungsgemäßen Verfahren ein Verfahren zur Verfügung steht, das ohne Applikation auskommt und somit ermöglicht, einen Radarsensor an einer nahezu beliebigen Stelle an dem Off-High-Way-Fahrzeug zu montieren und direkt in Betrieb zu nehmen. Bei der Verwendung des erfindungsgemäßen Verfahrens im Zusammenhang mit einem Off-High-Way-Fahrzeug kann außerdem vorteilhafter Weise Gebrauch von der Tatsache gemacht werden, dass es sich bei dem erfindungsgemäßen Verfahren um ein Verfahren handelt, das sehr robust auf das Auftreten verschieden starker Bodenreflexionen ist, so dass das erfindungsgemäße Verfahren insbesondere vorteilhaft für Baustellenfahrzeuge oder Agrarmaschinen verwendet werden kann. Baustellenfahrzeuge bzw. Agrarmaschinen befahren typischerweise Untergründe, die sehr uneben sind und daher sehr starke Bodenreflexionen verursachen können.

Vorteilhaft ist eine Vorrichtung, die eingerichtet ist, jeden Schritt des erfindungsgemäßen Verfahrens durchzuführen.

Vorteilhaft ist ein Computerprogramm, das eine Steuereinheit veranlasst, jeden Schritt des erfindungsgemäßen Verfahrens auszuführen, wenn das Computerproramm auf der Steuereinheit ausgeführt wird. Vorteilhaft ist außerdem ein Speichermedium, auf dem das Computerprogramm gespeichert ist.

Nachfolgend wird ein Ausführungsbeispiel der Erfindung näher vorgestellt. Dabei zeigen:

### Kurze Beschreibung der Zeichnungen

- Figur 1: eine schematische Darstellung eines Fahrzeugs, das eine zur Durchführung eines Ausführungsbeispiels des erfindungsgemäßen Verfahrens eingerichtete Vorrichtung umfasst;
- Figur 2: eine schematische Draufsicht auf das Fahrzeug;
- Figur 3: eine schematische Darstellung des Ablaufs eines Ausführungsbeispiels des erfindungsgemäßen Verfahrens.

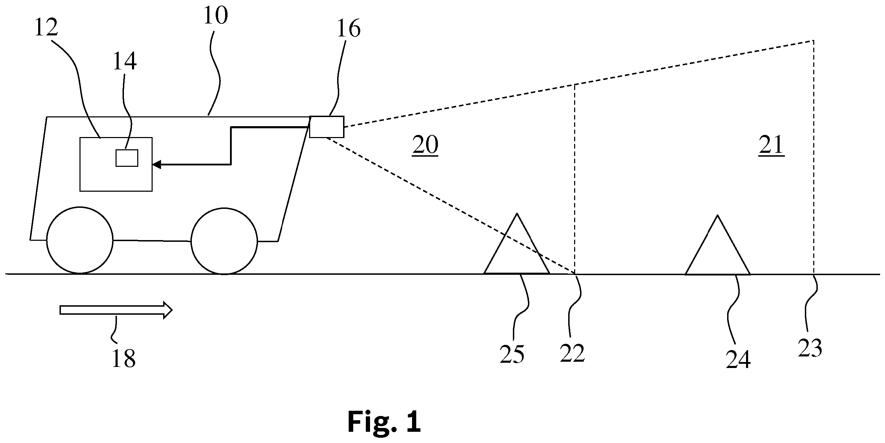

Figur 1 zeigt eine schematische Darstellung eines Fahrzeugs (10), das eine Vorrichtung umfasst, die zur Durchführung eines Ausführungsbeispiels des erfindungsgemäßen Verfahrens eingerichtet ist. Bei dem Fahrzeug (10) kann es sich insbesondere um ein Off-High-Way-Fahrzeug, insbesondere um eine Agrarmaschine oder ein Baufahrzeug, handeln. Das Fahrzeug (10) umfasst eine Steuereinheit (12), die wiederum ein Speichermedium (14) umfasst. Das Fahrzeug (10) umfasst außerdem einen Radarsensor (16). Der Radarsensor (16) ist derart am Fahrzeug (10) angeordnet, dass ein Bereich vor dem Fahrzeug (10) auf die Anwesenheit von Hindernissen überwacht werden kann. Der Radarsensor (16) ist außerdem derart am Fahrzeug (10) angeordnet, dass ein Überwachungsbereich (20, 21) in zwei Überwachungsteilbereiche unterteilbar ist.

Ein erster Überwachungsteilbereich (20) umfasst dabei den Bereich zwischen dem Radarsensor (16) und einer Bodenschnittlinie (22), wobei die Bodenschnittlinie dadurch definiert ist, dass im Bereich der Bodenschnittlinie die Radarkeule des Radarsensors (16) den Boden berührt. Der Überwachungsbereich umfasst außerdem einen zweiten

Überwachungsteilbereich (21), der sich von der Bodenschnittlinie (22) bis zu einer maximalen Überwachungsentfernung (23) erstreckt. Der Radarsensor (16) ist so eingerichtet, dass mit Hilfe des Radarsensors (16) detektierte Objekte (24, 25) klassifiziert werden können, so dass als Ergebnis der Klassifikation ein detektiertes Objekt (24, 25) gegebenenfalls als Hindernis erkannt und eine entsprechende Reaktion, beispielsweise die Ausgabe einer Warnung, eingeleitet wird. Eine Fahrtrichtung des Fahrzeugs (10) ist durch den Pfeil (18) angedeutet.

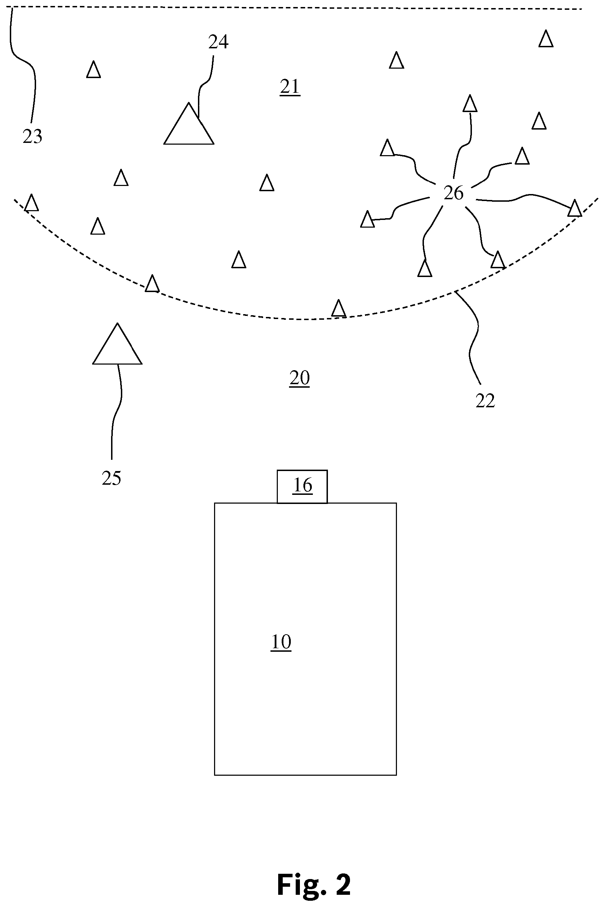

Figur 2 zeigt eine schematische Draufsicht auf das in Figur 1 gezeigte Fahrzeug (10). Figur 2 dient der besseren Illustration der Definittion der Bodenschnittlinie (22), die in der Draufsicht näherungsweise die Form eines Kreissegments aufweist. Die in der Beschreibung der Figur 1 bereits beschriebenen Bezugszeichen werden hier nicht erneut beschrieben. Die Radarkeule des Radarsensors (16) trifft im zweiten Überwachungsteilbereich (21) auf den Boden, sodass im zweiten Überwachungsteilbereich (21) eine Vielzahl von Bodenreflexionen (26) erfasst werden. Aus Gründen der Übersichtlichkeit sind nicht alle Bodenreflexionen mit Bezugszeichen versehen. Eine bei ebenem Boden näherungsweise kreissegmentförmige Linie, die die Bodenreflexionen (26) zum Fahrzeug (10) hin begrenzen, definiert die Bodenschnittlinie (22).

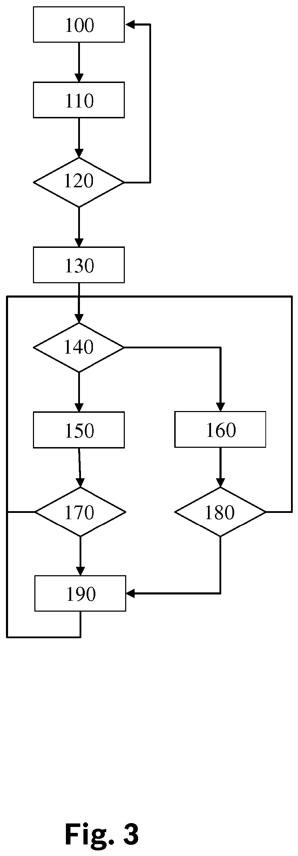

Figur 3 zeigt einen schematischen Ablauf eines Ausführungsbeispiels des erfindungsgemäßen Verfahrens. Das in Figur 3 illustrierte Ausführungsbeispiel startet in Schritt 100. In Schritt 100 wird mittels des Radarsensors (16) der Boden vor dem Fahrzeug (10) abgetastet. Anschließend folgt Schritt 110.

In Schritt 110 wird ausgehend von den in Schritt 100 empfangenen Radarreflexionen die Bodenschnittlinie (22) bestimmt. Hierfür wird eine Linie definiert, die die in Schritt 100 erfassten Bodenreflexionen (26) zum Fahrzeug (10) abgrenzt. Anschließend wird Schritt 120 durchgeführt. In einer alternativen Ausgestaltung wird die Position der Bodenschnittlinie (22) aus einem Speicher ausgelesen. In dieser alternativen Ausgestaltung wird die Bodenschnittlinie (22) zuvor aus einer Einbauhöhe, einem Sichtwinkel und einer Neigung des Radarsensors (16) bestimmt und in dem Speicher abgelegt.

In Schritt 120 wird überprüft, ob im Überwachungsbereich (20, 21) Objekte (24, 25) vorhanden sind. Mit anderen Worten wird in Schritt 120 überprüft, ob im Überwachungsbereich (20, 21) Radarreflexionen vorhanden sind, die nicht eindeutig als Bodenreflexionen (26) erkannt wurden. Sind im Überwachungsbereich keine Objekte (24,25) vorhanden, folgt im Anschluss an Schritt 120 erneut Schritt 100. Sind im Überwachungsbereich Objekte (24,25) vorhanden, folgt im Anschluss an Schritt 120 Schritt 130.

In Schritt 130 wird die Position jedes in Schritt 120 erkannten Objektes (24,25) bestimmt. Darüber hinaus wird jedes in Schritt 120 erkannte Objekt (24,25) mit einem unterscheidbaren Index versehen. Im Anschluss wird Schritt 140 durchgeführt.

In Schritt 140 wird überprüft, ob das Objekt (24,25) mit dem niedrigsten Index sich im ersten Überwachungsteilbereich (20) befindet. Befindet sich das Objekt (24) mit dem überprüften Index nicht im ersten Überwachungsteilbereich (20), wird anschließend Schritt 160 durchgeführt. Befindet sich das Objekt (25) im ersten Überwachungsteilbereich (20), wird im Anschluss an Schritt 140 Schritt 150 durchgeführt.

In Schritt 150 wird das Objekt (25) mit dem aktuellen Index anhand der ersten Klassifikationsregel klassifiziert. Die erste Klassifikationsregel sieht vor, jedes Objekt (25) als Hindernis zu klassifizieren, dessen Radarecho einen vorgebbaren Schwellwert überschreitet. Eine Eigengeschwindigkeit des zu klassifizierenden Objektes (25) wird im Rahmen der ersten Klassifizierungsregel nicht berücksichtigt. Im Anschluss an Schritt 150 wird Schritt 170 durchgeführt.

In Schritt 170 wird überprüft, ob es sich bei dem in Schritt 150 klassifizierten Objekt (25) um ein Hindernis handelt. Handelt es sich um ein Hindernis, wird im Anschluss an Schritt 170 Schritt 190 durchgeführt. Handelt es sich nicht um ein Hindernis, wird im Anschluss an Schritt 170 erneut Schritt 140 durchgeführt. Bei der erneuten Durchführung von Schritt 140 wird der Index erhöht.

In Schritt 190 wird durch das erkannte Hindernis eine Reaktion ausgelöst. Bei dieser Reaktion kann es sich beispielsweise um eine optische oder akustische Warnung handeln, die einem Anwender des Fahrzeugs (10) zur Kenntnis gebracht wird. Bei der Reaktion im Rahmen von Schritt 190 kann es sich auch um einen automatischen Eingriff in den Betrieb des Fahrzeugs (10) handeln, beispielsweise eine Notbremsung.

Im Schritt 160 wird das zu überprüfende Objekt anhand der zweiten Klassifikationsregel klassifiziert. Die zweite Klassifizierungsregel sieht vor, ein Objekt (24) nur dann als Hindernis zu klassifizieren, wenn das Objekt (24) über eine von null verschiedene Eigengeschwindigkeit verfügt oder in einem früheren Durchlauf des Ausführungsbeispiels des erfindungsgemäßen Verfahrens über eine von null verschiedene Eigengeschwindigkeit verfügte. In vorteilhafter Ausgestaltung wird ein stehendes Objekt (24) im Rahmen der zweiten Klassifizierungsregeln nur dann als Hindernis klassifiziert, wenn das im aktuellen Zyklus des erfindungsgemäßen Verfahrens stehende Objekt (24) in jedem zuvor durchlaufenden Zyklus seit dem ersten Zyklus, bei dem das Objekt eine von null verschiedene Eigengeschwindigkeit aufgewiesen hat, erkannt wurde. Im Anschluss wird Schritt 180 durchgeführt.

In Schritt 180 wird überprüft, ob das in Schritt 160 klassifizierte Objekt (24) ein Hindernis darstellt oder nicht. Handelt es sich bei dem in Schritt 160 klassifizierten Objekt (24) um ein Hindernis, wird im Anschluss an Schritt 180 Schritt 190 durchgeführt. Handelt es sich bei dem Objekt (24) nicht um ein Hindernis, wird im Anschluss an Schritt 180 erneut Schritt 140 durchgeführt, wobei der Index bei einer erneuten Durchführung von Schritt 140 erhöht wird.

Das vorgestellte Ausführungsbeispield des erfindungegemäßen Verfahrens wird zyklisch wiederholt (in Figur 3 nicht dargestellt), sodass die Bodenschnittlinie (22) stets aktualisiert wird.

Das vorgestellte Ausführungsbeispiel des erfindungsgemäßen Verfahrens ermöglicht somit eine zuverlässige Erkennung von Hindernissen mit Hilfe eines Radarsensors (16), der nach seiner Montage an einem Fahrzeug (10) nicht kalibriert werden muss, sondern sich durch die Erkennung der Bodenschnittlinie (22) und die anschließende Aufteilung des Überwachungsbereichs in einen ersten Teilüberwachungsbereich (20) und einen zweiten Überwachungsteilbereich (21) selbst kalibriert.

## Patentansprüche

1. Verfahren zum Erkennen eines Hindernisses vor einem Fahrzeug (10) mittels eines Radarsensors (16), wobei der Radarsensor (16) einen Überwachungsbereich vor dem Fahrzeug (10) überwacht, wobei eine Klassifikation eines mittels des Radarsensors im Überwachungsbereich detektierten Objektes (24,25) vorgenommen wird, wobei der Überwachungsbereich in Überwachungsteilbereiche (20,21) unterteilt wird und für einen ersten Überwachungsteilbereich (20) eine erste Klassifikationsregel zur Klassifikation verwendet wird und für einen zweiten Überwachungsteilbereich (21) eine zweite Klassifikationsregel zur Klassifikation verwendet wird, wobei die erste Klassifikationsregel unabhängig von einer Eigengeschwindigkeit des im Überwachungsbereich detektierten Objektes (25) ist, wobei die zweite Klassifikationsregel umfasst, das im Überwachungsbereich detektierte Objekt (24) in Abhängigkeit einer Eigengeschwindigkeit des im Überwachungsbereich detektierten Objekts (24) zu klassifizieren, wobei die zweite Klassifikationsregel umfasst das im Überwachungsbereich detektierte Objekt (24) als Hindernis zu klassifizieren, wenn mittels des Radarsensors (16) erkannt wird, dass das im Überwachungsbereich detektierte Objekt (24) über eine von null verschiedene Eigengeschwindigkeit verfügt oder zu einem früheren Zeitpunkt verfügt hat, **dadurch gekennzeichnet, dass** sich der erste Überwachungsteilbereich (20) zwischen dem Radarsensor (16) und einer Bodenschnittlinie (22) erstreckt und sich der zweite Überwachungsteilbereich (21) zwischen der Bodenschnittlinie (22) und einer maximalen Überwachungsentfernung (23) erstreckt, wobei die Bodenschnittlinie (22) mittels des Radarsensors (16) bestimmt wird, wobei die Bodenschnittlinie dadurch definiert ist, dass im Bereich der Bodenschnittlinie die Radarkeule des Radarsensors (16) den Boden berührt.

2. Fahrzeug (10) umfassend einen Radarsensor (16) und eine Steuereinheit (12) mit einem Speichermedium (14), wobei das Fahrzeug (10) eingerichtet ist, jeden Schritt des Verfahrens nach Anspruch 1 durchzuführen.

## Claims

1. Method for detecting an obstacle in front of a vehicle (10) by means of a radar sensor (16), wherein the radar sensor (16) monitors a monitoring area in front of the vehicle (10), wherein an object (24,25) detected by means of the radar sensor in the monitoring area is classified, wherein the monitoring area is divided into monitoring sub-areas (20,21) and a first classification rule is used for classification for a first monitoring sub-area (20) and a second classification rule is used for classification for a second monitoring sub-area (21), wherein the first classification rule is independent of an ego speed of the object (25) detected in the monitoring area, wherein the second classification rule comprises classifying the object (24) detected in the monitoring area on the basis of an ego speed of the object (24) detected in the monitoring area, wherein the second classification rule comprises classifying the object (24) detected in the monitoring area as an obstacle when it is detected by means of the radar sensor (16) that the object (24) detected in the monitoring area has an ego speed different from zero or had it at an earlier time, **characterized in that** the first monitoring sub-area (20) extends between the radar sensor (16) and a ground intersection line (22) and the second monitoring sub-area (21) extends between the ground intersection line (22) and a maximum monitoring distance (23), wherein the ground intersection line (22) is determined by means of the radar sensor (16), wherein the ground intersection line is defined by virtue of the fact that the radar lobe of the radar sensor (16) touches the ground in the area of the ground intersection line.

2. Vehicle (10) comprising a radar sensor (16) and a control unit (12) having a storage medium (14), wherein the vehicle (10) is configured to carry out each step of the method according to Claim 1.

## Revendications

1. Procédé de reconnaissance d'un obstacle devant un véhicule (10) au moyen d'un capteur radar (16), le capteur radar (16) surveillant une zone de surveillance devant le véhicule (10), une classification d'un objet (24, 25) détecté dans la zone de surveillance au moyen du capteur radar étant effectuée, la zone de surveillance étant subdivisée en zones de surveillance partielles (20, 21) et une première règle de classification étant utilisée pour une première zone de surveillance partielle (20) en vue de la classification et une deuxième règle de classification étant utilisée pour une deuxième zone de surveillance partielle (21) en vue de la classification, la première règle de classification étant indépendante d'une vitesse propre de l'objet (25) détecté dans la zone de surveillance, la deuxième règle de classification comprenant la classification de l'objet (24) détecté dans la zone de surveillance en fonction d'une vitesse propre de l'objet (24) détecté dans la zone de surveillance, la deuxième règle de classification comprenant la classification de l'objet (24) détecté dans la zone de surveillance en tant qu'obstacle lorsqu'il est reconnu, au moyen du capteur radar (16), que l'objet (24) détecté dans la zone de surveillance dispose d'une vitesse propre différente de zéro ou en disposait d'une à un moment antérieur, **caractérisé en ce que** que la première zone de surveillance partielle (20) s'étend entre le capteur radar (16) et une ligne d'intersection avec le sol (22) et la deuxième zone de surveillance partielle (21) s'étend entre la ligne d'intersection avec le sol (22) et une distance de surveillance maximale (23), la ligne d'intersection avec le sol (22) étant déterminée au moyen du capteur radar (16), la ligne d'intersection avec le sol étant définie par le fait que, dans la zone de la ligne d'intersection avec le sol, le lobe du capteur radar (16) touche le sol.

2. Véhicule (10) comprenant un capteur radar (16) et une unité de commande (12) pourvue d'un support de stockage (14), le véhicule (10) étant conçu pour exécuter chaque étape du procédé selon la revendication 1.
